# EUROPÄISCHE PATENTSCHRIFT

(11) **EP 1 556 263 B1**
(45) Veröffentlichungstag und Bekanntmachung des Hinweises auf die Patenterteilung: **25.08.2010**
(21) Anmeldenummer: 03740101.5
(22) Anmeldetag: 23.06.2003
(51) Int. Cl.: B60T 7/12

(54) **VERFAHREN UND VORRICHTUNG ZUR STEUERUNG EINER RÜCKROLLVERHINDERUNGSEINRICHTUNG**
METHOD AND DEVICE FOR CONTROLLING A ROLL-BACK PREVENTION SYSTEM
PROCEDE ET DISPOSITIF DE COMMANDE D'UN SYSTEME ANTI-RECUL

(30) Priorität: 24.10.2002 DE 10249463
(43) Veröffentlichungstag der Anmeldung: 27.07.2005
(73) Patentinhaber: ROBERT BOSCH GMBH, 70442 Stuttgart (DE)
(72) Erfinder: SCHMIDT, Mario, 71696 Moeglingen (DE)
(86) Internationale Anmeldenummer: PCT/DE2003/002085
(87) Internationale Veröffentlichungsnummer: WO 2004/039647

(56) Entgegenhaltungen:
- EP-A- 0 251 156
- EP-A- 0 749 876
- WO-A-01/58714
- US-A- 6 086 515

## Beschreibung

### Stand der Technik

Die Erfindung geht aus von einem Verfahren und einer Vorrichtung zur Steuerung einer Rückrollverhinderungseinrichtung.

Aus der DE 195 25 552 A1 sind ein Verfahren und eine Anordnung zum Halten eines Fahrzeugs auf geneigter Fahrbahn bekannt. Dabei werden die Fahrzeuggeschwindigkeit, die Bremspedalbetätigung, das Anfahrmoment, der Betriebszustand des Fahrzeugmotors, das Betätigen einer Feststellbremse und das Aktivieren eines Haltesystems ermittelt. Wenn das Haltesystem aktiviert ist und die Fahrzeuggeschwindigkeit unter einem Grenzwert liegt, wird die Bremskraft bzw. der Bremsdruck aufrechterhalten, wenn das Bremspedal betätigt ist und kein Anfahrmoment sensiert wird. Es wird die Bremskraft erhöht, wenn bei ausgeschaltetem Antriebsmotor weder das Bremspedal noch die Feststellbremse betätigt werden oder wenn bei eingeschaltetem Motor weder eine Bremspedalbetätigung noch ein Anfahrmoment festgestellt werden. Die Bremskraft wird abgebaut, wenn bei ausgeschaltetem Motor und nicht betätigtem Bremspedal die Feststellbremse angezogen ist oder bei eingeschaltetem Motor ein Anfahrmoment sensiert wird. Mit Hilfe eines Türkontaktes und/oder eines Sitzkontaktes kann ein Warnsignal ausgelöst werden.

Die Merkmale der Oberbegriffe der unabhängigen Ansprüche sind der DE 195 25 552 A1 entnommen.

Dokument WO 01/58714 A1 offenbart ein Verfahren und eine Vorrichtung zum Beenden einer aktiven Anfahrhilfe-Funktion.

### Vorteile der Erfindung

Die Erfindung geht aus von einem Verfahren zur Steuerung einer Rückrollverhinderungseinrichtung, bei dem
- das Vorliegen einer geöffneten Fahrzeugtür detektiert wird und
- ein Stillstand des Fahrzeugs detektiert wird.

Der Kern der Erfindung besteht darin, dass
- bei Vorliegen einer geöffneten Fahrzeugtür zum Zeitpunkt des Eintritts des Fahrzeugstillstands die Rückrollverhinderungseinrichtung nicht aktiviert wird. Beispielsweise bei Einparkvorgängen ist häufig die Fahrertür leicht geöffnet, um dem Fahrer einen besseren Blick auf die Fahrbahn zu ermöglichen. Vorteilhafterweise wird durch die vorliegende Erfindung verhindert, dass nach erfolgtem Einparkvorgang mit geöffneter Fahrertür (Fahrzeug steht jetzt still) der Hillholder fälschlicherweise aktiviert wird. Bei einem aktivierten Hillholder würde die Gefahr bestehen, dass der Fahrer das Fahrzeug verlässt (im guten Glauben, dass das Fahrzeug stehen bleibt) und plötzlich setzt sich das Fahrzeug nach Ablauf der Haltezeit des Hillholders ohne Fahrer in Bewegung (sofern das Fahrzeug auf einer in Fahrzeuglängsrichtung geneigten Fläche eingeparkt wurde).

Der Begriff "Fahrzeugstillstand" ist dabei in einem weiten Sinne zu verstehen. Ein "exakter" Fahrzeugstillstand, bei dem die Geschwindigkeit v des Fahrzeugs mathematisch exakt Null ist, ist nicht erfassbar. Deshalb ist der Begriff "Fahrzeugstillstand" so auszulegen, dass die Fahrzeuglängsgeschwindigkeit kleiner als eine sehr geringe Grenzgeschwindigkeit ist. Dies kann auch so ausgedrückt werden, dass "im wesentlichen Fahrzeugstillstand" vorliegt.

Damit handelt es sich bei dem erfindungsgemäßen Verfahren um ein Verfahren zur Verhinderung der Aktivierung einer Rückrollverhinderungseinrichtung.

Unter dem Begriff "Rückrollverhinderungseinrichtung ist dabei ein Hillholder zu verstehen, welcher das Zurückrollen eines Fahrzeugs an einem Berg während eines Anfahrvorgangs, d.h. das Wegrollen eines Fahrzeugs in die bergabwärtige Richtung, verhindern soll.

Eine vorteilhafte Ausgestaltung ist deshalb dadurch gekennzeichnet, dass ein Stillstand des Fahrzeugs dann detektiert wird, wenn die Fahrzeuglängsgeschwindigkeit einen vorgebbaren, sehr kleinen Grenzwert unterschreitet.

Eine vorteilhafte Ausgestaltung ist dadurch gekennzeichnet, dass es sich bei der geöffneten Fahrzeugtür um die Fahrertür handelt.

Eine weitere vorteilhafte Ausgestaltung ist dadurch gekennzeichnet, dass eine geöffnete Fahrzeugtür über einen Türkontaktschalter erfasst wird. Ein Türkontaktschalter ist in nahezu allen Fahrzeugen enthalten. Dadurch lässt sich die vorliegende Erfindung vorteilhafterweise ohne wesentlichen Zusatzaufwand realisieren.

Die Vorrichtung zur Steuerung bzw. Verhinderung der Aktivierung einer Rückrollverhinderungseinrichtung enthält
- Türzustandsdetektionsmittel zur Detektion einer geöffneten Fahrzeugtür und
- Stillstandsdetektionsmittel zur Detektion eines Fahrzeugstillstands

Der vorteilhafte Kern der Vorrichtung besteht darin, dass weiterhin
- Aktivierungsverhinderungsmittel vorhanden sind, welche bei einer zum Zeitpunkt des Eintritts des Fahrzeugstillstands detektierten geöffneten Fahrzeugtür die Aktivierung der Rückrollverhinderungseinrichtung verhindern.

Eine vorteilhafte Ausgestaltung ist dadurch gekennzeichnet, dass die Türzustandsdetektionsmittel den Zustand der Fahrertür detektieren.

Eine weitere vorteilhafte Ausgestaltung ist dadurch gekennzeichnet, dass die Türzustandsdetektionsmittel als Türkontaktschalter ausgeprägt sind.

Weitere vorteilhafte Ausprägungen der Erfindung sind den Unteransprüchen zu entnehmen.

### Zeichnung

Ein Ausführungsbeispiel der Erfindung ist in den Zeichnungen 1 und 2 dargestellt.
Fig. 1 zeigt den Ablauf des erfindungsgemäßen Verfahrens.
Fig. 2 zeigt den Aufbau der erfindungsgemäßen Vorrichtung.

### Ausführungsbeispiele

Hill-Hold-Control (auch als HHC oder als "Hillholder" bezeichnet) ist ein System, welches den Fahrer beim Anfahren von der Bedienung der Handbremse befreit. HHC verhindert durch Aufrechterhaltung ("Einsperren") des vom Fahrer aufgebrachten Bremsdrucks das Zurückrollen des Fahrzeugs beim Lösen des Bremspedals bis zum eigentlichen Anfahren. Der Bremsdruck ist für die Dauer einer festen oder variablen Haltezeit vom HHC-System eingesperrt. Um dem Fahrer ein komfortables Wechseln vom Bremspedal auf das Gaspedal zu ermöglichen, kann die Haltezeit (d.h. Einsperrdauer) des Bremsdrucks nicht beliebig kurz gewählt werden. Somit kann es möglich sein, dass der Fahrer das Fahrzeug während der Haltezeit verlässt. Wird anschließend der Bremsdruck freigegeben (nachdem der Fahrer das Fahrzeug verlassen hat), kann das Fahrzeug ohne den Fahrer wegrollen.

Bei Fahrzeugen mit Schaltgetrieben kann mittels eines Kupplungsschalters die Präsenz des Fahrers beim Anfahrvorgang überprüft werden. Bei Fahrzeugen mit automatisierten Schaltgetrieben, Automatikgetrieben oder CVT-Getrieben (= stufenloses Automatikgetriebe) ist dies jedoch nicht möglich.

Um das Verlassen des Fahrzeugs durch den Fahrer bei aktiviert bleibender HHC-Funktion zu verhindern, besteht die Möglichkeit, den Fahrertürkontaktschalter (bzw. die Stellung des Fahrertürkontaktschalters) auszuwerten. Weiterhin ist es durch Auswertung des Fahrertürkontaktschalters möglich, die Haltezeit des HHC-Systems zu verlängern. Dabei muss aber sichergestellt werden, dass der Fahrer das Fahrzeug in dieser Zeit nicht auf anderem Wege verlassen kann (z.B. durch die Beifahrertür oder eine andere Tür, Fenster, offenes Dach,...).

Mögliche Formen der Auswertung des Fahrertürkontak-tschalters können sein:
- HHC wird bei offener Fahrertür nicht aktiviert, auch wenn alle anderen Bedingungen zur Aktivierung von HHC erfüllt sind.
- Bei bereits aktivierter HHC-Funktion wird HHC beendet, wenn die Fahrertür geöffnet wird und die Bremse nicht getreten ist.

Neben dem Fahrertürkontaktschalter kann auch zusätzlich noch der Beifahrertürkontaktschalter ausgewertet werden.

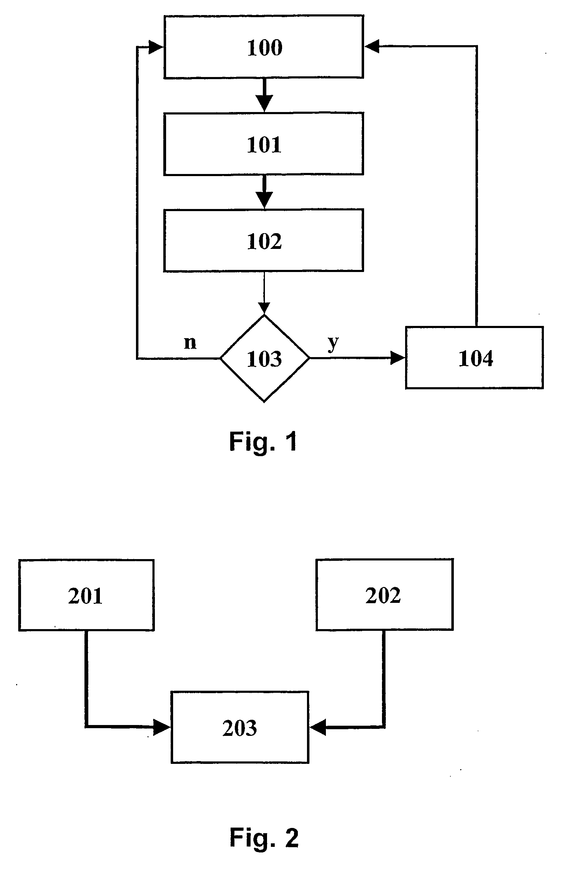

In Fig. 1 ist der Ablauf des erfindungsgemäßen Verfahrens skizziert. Der Start des Verfahrens ist in Block 100. Anschließend wird in Block 101 das Vorliegen einer geöffneten Fahrertür detektiert. In Block 102 wird danach ein Stillstand des Fahrzeugs detektiert. Anschließend wird in Block 103 überprüft, ob zum Zeitpunkt des Eintretens des Fahrzeugstillstands bereits eine geöffnete Fahrzeugtür vorlag. Lautet die Entscheidung "ja" (als "y" in Fig. 1 eingezeichnet), dann wird in Block 104 die Aktivierung der Rückrollverhinderungseinrichtung verhindert. Lautet die Antwort in Block 103 dagegen "nein" (als "n" in Fig. 1 eingezeichnet), dann wird zum Start des Verfahrens in Block 100 zurückverzweigt und die Aktivierung der Rückrollverhinderungseinrichtung wird nicht verhindert.

Der Aufbau der erfindungsgemäßen Vorrichtung ist in Fig. 2 dargestellt. Dabei enthält
- Block 201 Türzustandsdetektionsmittel zur Detektion einer geöffneten Fahrzeugtür und
- Block 202 Stillstandsdetektionsmittel zur Detektion eines Fahrzeugstillstands Die Ausgangssignale der Blöcke 201 und 202 werden Block 203 zugeführt. Block 203 enthält Aktivierungsverhinderungsmittel, welche bei einer zum Zeitpunkt des Eintritts des Fahrzeugstillstands als geöffnet detektierten Fahrzeugtür die Aktivierung der Rückrollverhinderungseinrichtung verhindern

## Patentansprüche

1. Verfahren zur Steuerung einer Rückrollverhinderungseinrichtung, bei dem
- das Vorliegen einer geöffneten Fahrzeugtür detektiert wird (101),
- ein Stillstand des Fahrzeugs detektiert wird (102),
**dadurch gekennzeichnet, dass**
- bei Vorliegen einer geöffneten Fahrzeugtür zum Zeitpunkt des Eintritts des Fahrzeugstillstands die Aktivierung der Rückrollverhinderungseinrichtung verhindert wird. (103).

2. Verfahren nach Anspruch 1, **dadurch gekennzeichnet, dass** es sich bei der geöffneten Fahrzeugtür um die Fahrertür handelt.

3. Verfahren nach Anspruch 1, **dadurch gekennzeichnet, dass** eine geöffnete Fahrzeugtür über einen Türkontaktschalter erfasst wird.

4. Verfahren nach Anspruch 1, **dadurch gekennzeichnet, dass** ein Stillstand des Fahrzeugs dann detektiert wird, wenn die Fahrzeuglängsgeschwindigkeit einen vorgebbaren, sehr kleinen Grenzwert unterschreitet.

5. Vorrichtung zur Steuerung einer Rückrollverhinderungseinrichtung, welche
- Türzustandsdetektionsmittel (201) zur Detektion einer geöffneten Fahrzeugtür und
- Stillstandsdetektionsmittel (202) zur Detektion eines Fahrzeugstillstands enthält, **dadurch gekennzeichnet, dass** weiterhin
- Aktivierungsverhinderungsmittel (203), welche bei einer zum Zeitpunkt des Eintritts des Fahrzeugstillstands als geöffnet detektierten Fahrzeugtür die Aktivierung der Rückrollverhinderungseinrichtung verhindern
vorhanden sind.

6. Vorrichtung nach Anspruch 5, **dadurch gekennzeichnet, dass** die Türzustandsdetektionsmittel den Zustand der Fahrertür detektieren.

7. Vorrichtung nach Anspruch 5, **dadurch gekennzeichnet, dass** die Türzustandsdetektionsmittel als Türkontaktschalter ausgeprägt sind.

## Claims

1. Method for controlling a roll-back prevention system, in which
- the presence of an open vehicle door is detected (101),
- a stationary state of the vehicle is detected (102),
**characterized in that**
- when an open vehicle door is present at the time when the stationary state of the vehicle starts, the activation of the roll-back prevention system is prevented. (103).

2. Method according to Claim 1, **characterized in that** the open vehicle door is the driver's door.

3. Method according to Claim 1, **characterized in that** an open vehicle door is sensed by means of a door contact switch.

4. Method according to Claim 1, **characterized in that** a stationary state of the vehicle is detected when the longitudinal speed of the vehicle drops below a predefinable, very low limiting value.

5. Device for controlling a roll-back prevention system which contains
- door state detection means (201) for detecting an open vehicle door
and
- stationary state detection means (202) for detecting a stationary state of the vehicle, **characterized in that**
- activation prevention means (203), which prevent the activation of a roll-back prevention system when a vehicle door is detected as being open at the time when the stationary state of the vehicle starts,
are also present.

6. Device according to Claim 5, **characterized in that** the door state detection means detects the state of the driver's door.

7. Device according to Claim 5, **characterized in that** the door state detection means are embodied as door contact switches.

## Revendications

1. Procédé de commande d'un dispositif anti-recul, dans lequel
- la présence de l'ouverture d'une porte du véhicule est détectée (101),
- l'arrêt du véhicule est détecté (102),
**caractérisé en ce que**
- l'activation du dispositif anti-recul est empêchée (103) lorsqu'une porte du véhicule est ouverte au moment où le véhicule passe à l'arrêt.

2. Procédé selon la revendication 1, **caractérisé en ce que** la porte ouverte du véhicule est la porte du conducteur.

3. Procédé selon la revendication 1, **caractérisé en ce que** l'ouverture d'une porte du véhicule est détectée par l'intermédiaire d'un commutateur de contact de porte.

4. Procédé selon la revendication 1, **caractérisé en ce que** l'arrêt du véhicule est détecté lorsque la vitesse longitudinale du véhicule n'atteint plus une très petite valeur limite prédéterminée.

5. Dispositif de commande d'un dispositif anti-recul qui continent :
- des moyens (201) de détection de l'état des portes qui détectent l'ouverture d'une porte du véhicule et
- des moyens (202) de détection de l'arrêt qui détectent l'arrêt du véhicule,
**caractérisé en ce que**
- il présente en outre des moyens (203) de blocage d'activation qui empêchent l'activation du dispositif anti-recul à l'instant où le véhicule passe à l'arrêt et que l'ouverture d'une porte a été détectée.

6. Dispositif selon la revendication 5, **caractérisé en ce que** les moyens de détection de l'état des portes détectent l'état de la porte du conducteur.

7. Dispositif selon la revendication 5, **caractérisé en ce que** les moyens de détection de l' état des portes sont configurés comme commutateurs de contact de porte.
